# EUROPÄISCHE PATENTSCHRIFT

(11) **EP 3 446 011 B1**
(45) Veröffentlichungstag und Bekanntmachung des Hinweises auf die Patenterteilung: **29.03.2023**
(21) Anmeldenummer: 17707180.0
(22) Anmeldetag: 03.02.2017
(51) Int. Cl.: F16K 27/00, F16K 27/02

(54) **PNEUMATISCHE MEHRVENTILVORRICHTUNG SOWIE HERSTELLUNGSVERFAHREN**
PNEUMATIC MULTI-VALVE DEVICE AND PRODUCTION METHOD
DISPOSITIF PNEUMATIQUE À PLUSIEURS SOUPAPES AINSI QUE PROCÉDÉ DE FABRICATION

(30) Priorität: 18.04.2016 DE 102016107160
(43) Veröffentlichungstag der Anmeldung: 27.02.2019
(73) Patentinhaber: Eto Magnetic GmbH, 78333 Stockach (DE)
(72) Erfinder: BRUCZUK, Witold, 51-523 Wroclaw (PL); BUNIO, Mariusz, 55-040 Zerniki Male (PL); ZINSER, Michael, 78359 Orsingen-Nenzingen (DE)
(74) Vertreter: Patent- und Rechtsanwälte Behrmann Wagner PartG mbB
(86) Internationale Anmeldenummer: PCT/EP2017/052379
(87) Internationale Veröffentlichungsnummer: WO 2017/182149

(56) Entgegenhaltungen:
- EP-A1- 1 486 709
- WO-A1-2015/044844
- CN-U- 203 202 358
- DE-A1-102013 113 673
- DE-B3-102014 103 246

## Beschreibung

Die Erfindung betrifft eine pneumatische Mehrventilvorrichtung (Ventilblock) gemäß dem Oberbegriff des Anspruchs 1, insbesondere zum Einsatz in elektronisch geregelten Luftfedersystemen von Fahrzeugen, bevorzugt Nutzfahrzeugen, umfassend ein einen Gehäusegrundköper aufweisendes Gehäuse mit mehreren elektromagnetischen Ventilaktuatoren, jeweils aufweisend stationär in dem Gehäuse angeordnete Spulenmittel, einen in dem Gehäuse angeordneten Kern sowie als Reaktion auf eine Bestromung der Spulenmittel in dem Gehäuse relativ zu dem Kern und einem (jeweiligen) Pneumatikanschluss des Gehäuses entlang einer Verstellachse verstellbare Ankermittel, wobei die Verstellachsen der (mehreren) Ankermittel der Ventilaktuatoren parallel ausgerichtet sind und die den Ankermitteln zugeordneten Pneumatikanschlüssen nebeneinander an einer Anschlussgehäuseseite angeordnet sind, die entlang der Verstellachsen von einer davon abgewandten Gehäuserückseite beabstandet ist, wobei die Kerne jeweils eine Entlüftungsbohrung aufweisen, die luftleitend mit einem auf der Gehäuserückseite von einem an dem Gehäusegrundkörper fixierten Gehäusedeckel begrenzten Entlüftungssammelkanal auf der von der Anschlussgehäuseseite abgewandten Seite der Kerne verbunden sind, der luftleitend mit einer Entlüftungsöffnung des Gehäuses, insbesondere im Gehäusegrundkörper, verbunden ist, die auf einer von der Gehäuserückseite unterschiedlichen Gehäuseseite, insbesondere auf der die Pneumatikanschlüsse aufweisenden Anschlussgehäuseseite, angeordnet ist.

Ferner betrifft die Erfindung ein Verfahren zum Herstellen einer solchen Mehrventilanordnung gemäß Anspruch 15.

Bekannte Mehrventilvorrichtungen (Ventilblöcke) werden im Rahmen von elektronisch geregelten Luftfedersystemen für Nutzfahrzeuge eingesetzt. Bei den bekannten Mehrventilvorrichtungen wirken die Ankermittel der unterschiedlichen Ventilaktuatoren mit einem jeweiligen außerhalb des Gehäuses in einer mit dem Gehäuse verbundenen Verteilerplatte angeordneten Ventilsitz zusammen, um die Verbindung von einer Druckluftleitung zu einer Arbeitsleitung im Rahmen der Luftfederanwendung zu öffnen und zu schließen. Die einzelnen Ventile bzw. Ventilaktuatoren werden entlüftet über in den Ankermitteln vorgesehene Entlüftungsbohrungen, die auf einer mit der Verteilerplatte verbundenen Pneumatikanschlussseite (Anschlussgehäuseseite) des Gehäuses abgewandten Gehäuserückseite in einem Sammelraum bzw. Sammelkanal münden, der von einem mit einem Gehäusekörper des Gehäuses verschraubten Deckel begrenzt ist, der zur Ausbildung des Sammelkanals eine wannenförmige Auswölbung aufweist. Zwischen Deckel und Gehäuse ist zur Herstellung einer gegenüber der Atmosphäre luftdichten Verbindung eine elastomere Ringdichtung angeordnet.

Aus dem Sammelkanal strömt die Entlüftungsluft über einen gehäuseseitigen Entlüftungskanal parallel zu den Verstellachsen der Aktuatormittel zu einer Entlüftungsöffnung auf der Anschlussgehäuseseite. Die Führung der Ankermittel erfolgt in Ankerführungsrohren, in die im Spulenträger der Spulenmittel der Ventilaktuatoren aufgenommen sind.

Als nachteilig bei den bekannten Ventilvorrichtungen wird der aufwendige Fertigungsprozess empfunden. Dies hat mehrere Gründe. Nachteilig ist insbesondere die aufwendige, luftdichte Deckelfixierung über mehrere Schraubprozesse und die Notwendigkeit des Vorsehens einer elastomeren Ringdichtung. Darüber hinaus wird als nachteilig empfunden, dass der Gehäusedeckel wannenartig ausgeformt sein muss, um die Entlüftungsbohrungen luftleitend miteinander zu verbinden bzw. um den Entlüftungssammelkanal auszubilden. Bei der bekannten Lösung überragen nämlich mit den Entlüftungsbohrungen axial fluchtende, in dem Gehäusegrundköper ausgebildete Verbindungskanäle eine Anlage- bzw. Grundfläche zur Auflage des Gehäusedeckels. Ein weiterer Nachteil bekannter Mehrventilvorrichtungen besteht darin, dass das Gehäuse in einem zweiteiligen Umspritzungsprozess hergestellt werden muss. Dies ist darauf zurückzuführen, dass zunächst die Spulenträger zusammen mit einer Drahtgitteranordnung zur elektrischen Kontaktierung der Spulenmittel umspritzt werden und die so hergestellte Einheit aus verschiedenen Spulenmitteln in einem gemeinsamen Trägerjoch aufgenommen wird, welches die verschiedenen Spulenmittel umklammert, worauf dann Trägerjoch und bereits umspritze Spulenmittel bzw. die Spulenmitteleinheit nochmals umspritzt werden bzw. wird. Das so hergestellte Gehäuse wird dann rückseitig mit dem Deckel zur Ausbildung des Entlüftungssammelkanals bzw. -raums verschraubt und auf der Pneumatikanschlussseite mit der Verteilerplatte verbunden. Zudem ist die benötige Kupfermenge zur Ausbildung der Spulenmittel relativ hoch.

Aus der CN203202358U ist eine pneumatische Mehrventilvorrichtung mit den Merkmalen des Oberbegriffs von Anspruch 1 bekannt.

Aus der WO 2015/044844 A1 ist ein Verfahren zur Befestigung von Gegenständen bekannt. Darin ist offenbart, dass an einem Ventilgehäuse ein Sichtglas oder ein elektrischer Stecker bzw. eine elektrische Steckeraufnahme über eine Schweißverbindung, insbesondere eine Laserschweißverbindung befestigt werden kann. Dazu sieht die Lehre des Dokuments vor, dass eine Öffnung mit einem Öffnungsrand genutzt wird, um einen Flansch eines entsprechenden Gegenstücks aufzunehmen und dass dann die Laserschweißung derart vorgenommen wird, dass der Laserstrahl in einen Übergangsbereich zwischen dem Rand und dem Flansch gerichtet wird.

Ausgehend von dem vorgenannten Stand der Technik liegt der Erfindung die Aufgabe zugrunde, eine einfache fertigbare pneumatische Mehrventilvorrichtung anzugeben, die bevorzugt mit einer geringeren Bauteilzahl auskommt. Bevorzugt soll auch die zum Einsatz kommende Kupfermenge zur Ausbildung der Spulenmittel (bei gleicher oder höherer Verstellkraft der Ankermittel) reduziert werden. Ferner besteht die Aufgabe darin, ein vereinfachtes Herstellverfahren für eine erfindungsgemäße Mehrventilvorrichtung anzugeben.

Diese Aufgabe wird hinsichtlich der pneumatischen Mehrventilvorrichtung mit den Merkmalen des Anspruchs 1 gelöst.

Hinsichtlich des Verfahrens wird die Aufgabe mit den Merkmalen des Anspruchs 15 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, den den Entlüftungssammelkanal auf der Gehäuserückseite begrenzenden Gehäusedeckel nicht wie bisher durch Verschrauben und Zwischenanordnung einer Elastomerdichtung mit dem Gehäusegrundkörper zu verbinden sondern durch Verschweißen, d.h. Herstellen einer Schweißverbindung, die jedoch nicht nur die Fixierfunktion sondern zusätzlich auch die Abdichtfunktion des Entlüftungssammelkanals gegenüber der Atmosphäre sicherstellt. Es erfolgt also die Verschweißung des Deckels derart, dass kein luftdurchlässiger Spalt zwischen Deckel und Gehäusegrundkörper verbleibt. Anders ausgedrückt wird der Gehäusedeckel durch Verschweißen, insbesondere Ultraschall- oder Laserschweißen mit dem Gehäusegrundkörper luftdicht verbunden, wobei die Schweißverbindung hierzu bevorzugt umlaufend, d.h. als Schweißringverbindung ausgebildet wird, um somit eine luftdichte Verbindung von Gehäusedeckel und Gehäusegrundkörper zu ermöglichen. Bevorzugt ist dabei eine Ausführungsform, bei der auf eine zwischen Gehäusedeckel und Gehäusegrundkörper vorgesehene Elastomerringdichtung zur Gewährleistung einer dichten Verbindung (Abdichtung des Entlüftungskanals gegenüber der Atmosphäre) verzichtet wird. Insbesondere dann, wenn auf die Elastomerdichtung verzichtet wird, wird die Bauteilanzahl reduziert. Darüber hinaus ist die Realisierung einer luftdichten Schweißverbindung fertigungstechnisch beherrscht bzw. überraschend einfach, so dass auf zusätzliche mechanische Verbindungen, wie Schraubverbindungen und die hierzu notwendigen Fixierschritte verzichtet werden kann. Darüber hinaus kann der Gehäusedeckel verglichen mit der Stand der Technik-Lösung eine geringere Flächenerstreckung aufweisen, da die Kontakt- bzw. Auflagefläche am Gehäusegrundkörper aufgrund der Realisierung einer Schweißverbindung anstelle einer Schraubverbindung deutlich geringer ausfallen kann.

Weiterhin erfindungsgemäß ist vorgesehen, dass der Entlüftungssammelkanal eine im Gehäusegrundkörper, insbesondere aufgrund einer entsprechenden Werkzeugausgestaltung des entsprechenden Herstellungs-Spritzgusswerkzeuges, eine eingeformte Wanne aufweist, deren in Richtung Gehäuserückseite gewandte Wannenöffnung von dem Gehäusedeckel verschlossen ist. In die Wanne, insbesondere an bzw. in einem Wannengrund, münden von dem Gehäusegrundkörper ausgebildete, luftleitend mit den Entlüftungsbohrungen der Kerne verbundene, bevorzugt axial mit diesen fluchtende, Verbindungskanäle, und zwar jeweils mit Abstand von dem Wannenrand in Richtung Anschlussgehäuseseite versetzt. Zusätzlich mündet in die Wanne, insbesondere an bzw. in einem Wannengrund ein zu der Entlüftungsöffnung führender, vorzugsweise diese entweder ausbildender, bevorzugt von dem Grundgehäusekörper gebildeter Entlüftungskanal, wobei auch der Entlüftungskanal mit Abstand zum Wannenrand in Richtung Anschlussgehäuseseite versetzt ist. Noch anders ausgedrückt befinden sich die Auslassöffnungen der Verbindungskanäle und die Einlassöffnung des Entlüftungskanals bei einer gedachten Aufstellung des Gehäuses auf der Gehäuseanschlussseite entlang einer Vertikalen unterhalb der Wannenöffnung bzw. des Wannenrandes, und zwar mit Abstand versetzt hierzu. Wichtig ist es also, dass die Öffnungen der Verbindungskanäle und die Öffnung des mindestens einen, vorzugsweise ausschließlich einen Entlüftungskanals in Richtung der Anschlussgehäuseseite rückversetzt sind, bezogen auf einen in Richtung Gehäuserückseite weisenden Wannenrand, so dass die luftleitende Verbindung zwischen den Verbindungskanälen und damit den Entlüftungsbohrungen untereinander sowie zu dem Entlüftungskanal nicht erst wie im Stand der Technik durch eine entsprechend gewölbte Ausführung des Gehäusedeckels, also mittels des Gehäusedeckels geschaffen werden muss sondern die luftleitende Verbindung durch eine gehäusegrundkörperseitige Einformung bzw. Wanne selbst sichergestellt wird. Diese Ausführungsform ermöglicht es dann den Gehäusedeckel vergleichsweise flach auszugestalten - insbesondere können Auswölbungen in eine von der Gehäuseanschlussseite abgewandte Richtung vermieden werden - insgesamt kann hierdurch eine kleinvolumigere Bau form der Mehrventilvorrichtung geschaffen werden, die bei dem knappen Bauraum im Kfz-Einsatzbereich von Vorteil ist.

Als besonders zweckmäßig hat es sich herausgestellt, dass die Wannenöffnung von einem den Wannenrand ausbildenden umlaufenden, monolithisch (einteilig) mit dem Gehäusegrundkörper, insbesondere im Kunststoffspritzgussverfahren, ausgebildeten Ringkragen begrenzt ist, auf dem stirnseitig, d.h. auf der von der Anschlussgehäuseseite abgewandten Rückseite des Gehäusegrundkörpers aufsitzt. Dabei kann der Gehäusedeckel unmittelbar mit dem Ringkragen und/oder mit einem zu dem Ringkragen benachbarten Gehäusegrundkörperabschnitt verschweißt sein, wobei es im Hinblick auf eine Bauraumvolumenminimierung bevorzugt ist den Gehäusedeckel mit dem Ringkragen, bevorzugt ausschließlich mit diesem zu verschweißen.

Um zusätzlich zu der Schweißverbindung eine in Richtung der Flächenerstreckung des Gehäusedeckels wirksame Formschlussverbindung zu schaffen, die insbesondere für einen, insbesondere automatisierten Positioniervorgang bzw. -schritt vor dem Verschweißvorgang von Vorteil ist, ist in Weiterbildung der Erfindung vorgesehen, dass der Gehäusedeckel den Ringkragen auf dessen Außenumfangsseite in Richtung Anschlussgehäuseseite übergreift. Zusätzlich oder alternativ kann der Gehäusedeckel auf der Innenseite des Ringkragens in die Wanne in Richtung der Anschlussgehäuseseite hineinragen. Ganz besonders bevorzugt ist es, wenn der Gehäusedeckel innenseitig, d.h. auf der dem Gehäusegrundkörper zugewandte Seite eine Ringnut aufweist, in der der Ringkragen stirnseitig aufnehmbar ist.

Von besonderem Vorteil ist es, wenn der Gehäusedeckel in Richtung der Entlüftungskanäle, bevorzugt in die Verbindungskanäle hineinragende Ausstülpungen aufweist, die bevorzugt auf der Gehäuserückseite Verstärkungsrippen umfassen. Zum einen kann hierdurch ein Bauteilsverzug vermieden werden. Darüber hinaus wird die Stabilität des Gehäusedeckels erhöht. Von besonderem Vorteil ist es, wenn der Gehäusedeckel auf der Gehäuserückseite keine von dem Gehäusegrundkörper wegweisenden Erhebungen oder Ausstülpungen aufweist, sondern eine flache bzw. ebene Fläche bildet.

Ganz besonders bevorzugt ist es, wenn das Gehäuse bzw. der Gehäusegrundkörper zu dessen Herstellung einen einzigen Umspritzungsvorgang benötigt. Bevorzugt umfasst das Gehäuse (zusätzlich zu dem Gehäusedeckel) einen einzigen monolithischen Gehäusegrundkörper, der die sonstigen Bestandteile bzw. Funktionseinheiten der Mehrventilvorrichtung beinhaltet. Dies bedeutet, dass die Spulenmittel nicht durch einen vorgelagerten Umspritzungsschritt zu einer Spuleneinheit zusammengefasst werden, die dann nach Anordnung eines Jochs nochmals umspritzt wird - vielmehr ist es bevorzugt, wenn die Spulenmittel zusammen mit einem jeweiligen Joch unmittelbar von dem Gehäusegrundkörper umspritzt werden bzw. der Gehäusegrundkörper durch Umspritzen der Spuleneinheiten samt Joch geschaffen wird, an dem dann in erfindungsgemäßer Weise der Gehäusedeckel durch Verschweißen luftdicht festgelegt wird.

Besonders zweckmäßig ist es, wenn die Pneumatikanschlüsse des Gehäuses in dem vorerwähnten monolithischen Gehäusekörper durch Umspritzen gehalten sind.

Im Hinblick auf eine vereinfachte Montage ist es bevorzugt, wenn die Verbindungskanäle, die die Entlüftungsbohrungen in den Kernen in Richtung Gehäusegrundkörperwanne verlängern bzw. mit dem Entlüftungssammelkanal verbinden eine gemeinsame elektrische Anschlussplatte zur elektrischen Kontaktierung der mehreren Spulenmittel, bevorzugt axial in Verlängerung der Verstellachsen, durchsetzen. Anders ausgedrückt erstreckt sich bevorzugt der Gehäusegrundkörper mit einem die Verbindungskanäle ausbildenden Abschnitt axial durch die Anschlussplatte hindurch. Eine solche Anschlussplatte befindet sich bevorzugt auf der von der Anschlussgehäuseseite abgewandten Seite der Spulenmittel, wobei es besonders bevorzugt ist, wenn die Anschlussplatte auf magnetisch leitende Jochelemente der einzelnen Spulenmittel aufgesetzt wird bzw. ist.

Zur Einsparung von Kupfer für die Spulenmittel ist es bevorzugt, wenn auf Ankerführungsrohre zur Führung der Ankermittel bei ihrer Verstellbewegung entlang der jeweiligen Verstellachse verzichtet wird und die Ankermittel unmittelbar in einer zentrischen Durchgangsöffnung eines jeweiligen Spulenträgers, insbesondere ein Kunststoffspritzgussteil, geführt sind. Hierdurch wird der Abstand der Ankermittel zu den Spulenmittel reduziert und zudem ein Materialübergang eingespart.

Bevorzugt sind die Entlüftungsbohrungen in dem Kern als axiale Durchgangskanäle ausgebildet, die geradlinig in Verlängerung der Verstellachsen verlaufen. Bevorzugt umfasst jeder Kern eine zentrische, geradlinig axial verlaufende und mit der Verstellachse fluchtende Entlüftungsbohrung.

Als besonders zweckmäßig hat es sich herausgestellt, dass die Ankermittel mit dem jeweils zugehörigen Kern eine Arbeitskammer begrenzen, die über die zugehörige Entlüftungsbohrung und bevorzugt den gehäusekörperseitigen Verbindungskanal in dem von dem Gehäusedeckel begrenzten Entlüftungssammelkanal entlüftbar ist.

Die Spulenträger sind bevorzugt jeweils einteilig mit einem pneumatischen Anschluss ausgebildet, der das Gehäuse, insbesondere den monolithischen Gehäusekörper auf der Anschlussgehäuseseite durchsetzt. Zur Anbindung des pneumatischen Anschlussbereichs an die zugehörige Entlüftungsbohrung im Kern ist es bevorzugt, wenn eine den jeweiligen Ankermitteln zugeordnete Verbindungsleitung vorgesehen ist, die den Pneumatikanschluss, insbesondere eine Arbeitsleitung, luftleitend mit der zugehörigen Entlüftungsbohrung verbindet, insbesondere über eine zwischen den Ankermitteln und dem Kern ausgebildete Arbeitskammer. Vorgenannte Verbindungsleitung ist bevorzugt als innerhalb der Ankermittel ausgebildete Bohrungen realisiert. Zusätzlich oder alternativ ist es ein Verbindungskanal am Außenumfang der Ankermittel realisierbar, der bevorzugt radial außen unmittelbar vom Spulenträger begrenzt ist.

Als besonders zweckmäßig hat es sich herausgestellt, den Ankermitteln jeweils einen der zugehörigen Entlüftungsbohrung zugeordneten Entlüftungsventilsitz zum Verschließen der jeweiligen Entlüftungsbohrung, bevorzugt durch Bestromen der Spulenmittel zuzuordnen. Bevorzugt wirken die Ankermittel mit einem in diesen gehaltenem, stirnseitigen Dichtelement, insbesondere ein Elastomerelement mit dem kernseitigen Entlüftungsventilsitz zusammen. Unabhängig von der konkreten Ausgestaltung der Paarung Ankermittel/Entlüftungsventilsitz ist es bevorzugt, wenn die Ankermittel entgegen der Federkraft einer Rückstellfeder bei Bestromen des Spulenmittels verstellbar sind, wobei es ganz besonders bevorzugt ist, wenn die Federmittel die Ankermittel von dem Entlüftungsventilsitz weg federkraftbeaufschlagen, so dass der bevorzugt von den Ankermitteln und dem Kern begrenzte Arbeitsraum, der bevorzugt über eine ankerseitige Verbindungsleitung mit dem Anschlussbereich luftleitend verbunden und bei Nicht-Bestromung entlüftet ist.

Die Ankermittel wirken bevorzugt unmittelbar, insbesondere über daran festgelegte, noch weiter bevorzugt elastomere Dichtmittel mit einem Arbeitsventilsitz zusammen, der weiter bevorzugt auf einer von dem jeweiligen Anschlussventilsitz abgewandten Seite, d.h. im Bereich der Anschlussgehäuseseite angeordnet ist. Weiter bevorzugt sind die Arbeitsventilsitze nicht in dem monolithischen Kunststoffgehäusekörper, sondern innerhalb einer über die Pneumatikanschlüsse mit dem Gehäuse verbundenen Verteilerplatte angeordnet. In der Verteilerplatte verläuft bevorzugt mindestens eine Druckversorgungsleitung, insbesondere eine gemeinsame Druckversorgungsleitung für sämtliche Ventilaktuatoren, wobei die Ventilaktuatoren durch unmittelbare oder mittelbare Wechselwirkung der Ankermittel mit dem Arbeitsventilsitz eine Öffnung zwischen der mindestens einen Druckversorgungsleitung und einer, insbesondere jeweiligen Arbeitsleitung öffnen oder schließen. Bevorzugt ist eine vorerwähnte, vorzugsweise vorgesehene Rückstellfeder derart angeordnet, dass diese Verbindung bei Nicht-Bestromung der Spulenmittel automatisch geschlossen wird oder bleibt.

Die Erfindung führt auch auf ein Verfahren zum Herstellen einer nach dem Konzept der Erfindung ausgebildeten Mehrventilanordnung. Als Bestandteil des Verfahrens werden mehrere Spulenmittel mit jeweils einem darin angeordneten Kern bereitgestellt, wobei jeder Kern eine Entlüftungsbohrung aufweist. Erfindungsgemäß wird ein Gehäusegrundkörper hergestellt, vorzugsweise durch gemeinsames Umspritzen der Spulenmittel, noch weiter bevorzugt zusammen mit den die Spulenmitteln umgebenden Jochen, wobei an dem Grundkörper durch Verschweißen ein Gehäusedeckel luftdicht fixiert wird. Bevorzugt verschließt der Gehäusedeckel dabei eine beim Herstellen des Gehäusegrundkörpers im Kunststoffspritzgussverfahren eingeformte Wanne, in die die Entlüftungsbohrungen über im Gehäusegrundkörper ausgebildete Verbindungskanäle einmünden, und zwar mit Abstand entlang der gedacht verlängerten Verstellachsen der Ankermittel zu einem Wannenöffnungsrand, der noch weiter bevorzugt von einem vorstehenden, einteilig mit dem Gehäusegrundkörper ausgebildeten Ringkragen gebildet wird. Bevorzugt wird zur Herstellung des Gehäusegrundkörpers ein einziger Umspritzungsvorgang angewendet, bei dem erstmals die einzelnen Spulenmittel in einem gemeinsamen Gehäusekörper, nämlich dem Gehäusegrundkörper aufgenommen werden. Besonders bevorzugt ist es, wenn vor diesem Umspritzungsvorgang die Spulenmittel durch eine gemeinsame Anschlussplatte kontaktiert werden, die ebenfalls mit umspritzt wird und die zu einem, insbesondere seitlichen Anschluss, insbesondere einer Buchse oder einem Stecker führt, der ebenfalls durch abschnittsweises Umspritzen in dem Gehäusegrundkörper gehalten ist bzw. wird.

Weitere Vorteile, Merkmale und Einzelheiten der Erfindung ergeben sich aus der nachfolgenden Beschreibung bevorzugter Ausführungsbeispiele sowie anhand der Figuren.

Diese zeigen in:
- Fig. 1a bis 1g:: unterschiedliche Fertigungsstufen zur Herstellung einer in Fig. 1g:im Schnitt gezeigten Mehrventilvorrichtung,
- Fig. 2a bis 2d:: eine alternatives Ausführungsbeispiel mit einer nach dem Konzept der Erfindung ausgebildeten Mehrventilanordnung in unterschiedlichen, teilweise geschnittenen Ansichten, und
- Fig. 3a bis 3d:: ein Ausführungsbeispiel gemäß den Fig. 1a bis 1g entsprechende Mehrventilvorrichtungen in unterschiedlichen, teilweise geschnittenen Ansichten.

In den Figuren sind gleiche Elemente und Elemente mit der gleichen Funktion mit den gleichen Bezugszeichen gekennzeichnet.

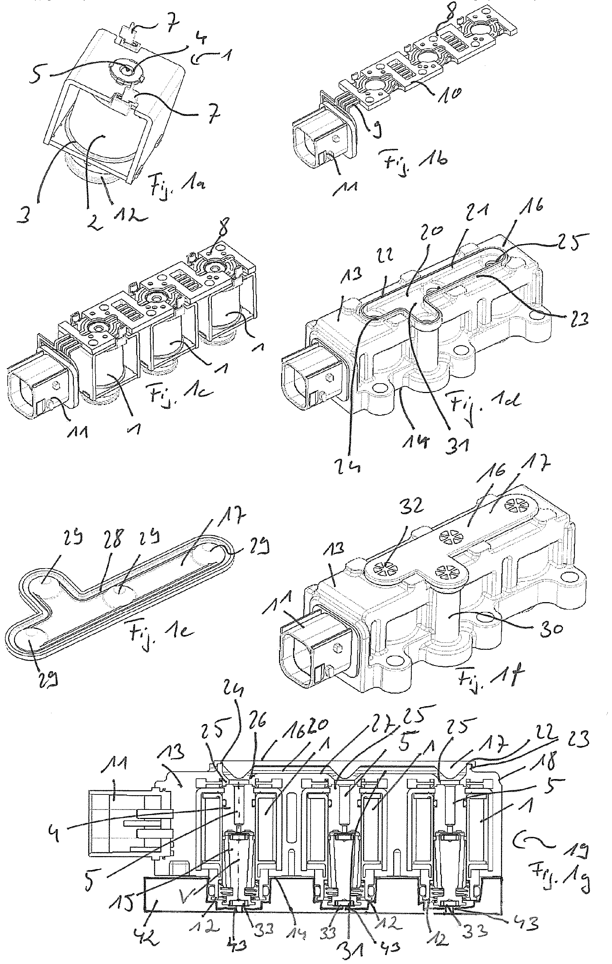

In den Fig. 1a bis 1e sind unterschiedliche Montageschritte und Komponenten zur Herstellung einer in Fig. 1f in einer perspektivischen Ansicht dargestellten, erfindungsgemäßen Ventilvorrichtung gezeigt, die wiederum in Fig. 1g in einer Schnittansicht dargestellt ist.

In Fig. 1a ist ein vormontierter, elektromagnetischer Ventilaktuator 1 gezeigt, von welchem in der in den Fig. 1f und 1g dargestellten fertigen Mehrventilvorrichtung (Ventilblock) mehrere - hier beispielhaft drei Stück - vorgesehen sind. Der elektromagnetische Ventilaktuator 1 umfasst bestrombare Spulenmittel 2 (elektrische Wicklung), die auf einem als Kunststoffspritzgussteil ausgebildeten Spulenträger 3 angeordnet ist. In einer zentralen Durchgangsöffnung (Zentralbohrung) des Spulenträgers 3 befindet sich ein Kern 4 zum elektromagnetischen Zusammenwirken mit nicht gezeigten Ankermitteln. In den Kern 4 ist eine zentrale Entlüftungsbohrung 5 vorgesehen. Die Spulenmittel 3 sind umklammert von einem magnetisch leitenden Joch 6 zum Umschließen des Magnetkreises. Zu erkennen sind elektrische Kontaktelemente 7 zur Bestromung bzw. elektrischen Kontaktierung der Spulenmittel 2.

In Fig. 1a ist in der Zeichnungsebene unten ein Pneumatikanschluss 12 zur pneumatischen Kontaktierung des Ventilaktuators 1 gezeigt.

In den Rahmen des Herstellungsverfahrens werden mehrere solcher Ventilaktuatoren 1, hier beispielhaft drei, bereitgestellt. In Fig. 1b ist eine Anschlussplatte 8 zur elektrischen Kontaktierung der Kontakte 7 mehrerer Ventilaktuatoren 1 gezeigt. Die Anschlussplatte 8 besteht aus Leitungsflächen 9 sowie Anflanschabschnitten 10 zum Festlegen mehrerer, hier drei, Ventilaktuatoren 1. Die Anschlussplatte 8 umfasst elektrische Anschlussmittel 11, hier in Form einer Kontaktbuchse.

Fig. 1c zeigt den nächsten Montage- bzw. Herstellungsschritt. Zu erkennen ist, dass die mehreren Ventilaktuatoren 1 an der Anschlussplatte 8 angeordnet sind, die sich senkrecht zu den später noch zu erläuternden Verstellachsen V der Ankermittel 15 (vgl. Fig. 1g) erstreckt.

Die Anordnung aus Anschlussplatte 8 mit Anschlusskontakt 10 und den Ventilaktuatoren 1 wird in einem nächsten Fertigungsschritt umspritzt und dadurch ein monolithischer Gehäusegrundkörper 13 geschaffen, aus dessen in Fig. 1g unten gezeigter Anschlussgehäuseseite 14 die pneumatischen Anschlüsse der Ventilaktuatoren 1 herausragen. Von der Anschlussgehäuseseite 14 entlang der Verstellachsen V der Ankermittel 15 beabstandet befindet sich eine Gehäuserückseite 16 des aus dem Gehäusegrundkörper 13 und einem daran durch Verschweißen festgelegten Gehäusedeckel 17 gebildeten Gehäuses 18 der Mehrventilrichtung 19.

In Fig. 1d ist zu erkennen, dass auf der von der Anschlussgehäuseseite 14 abgewandten Seite des Gehäusegrundkörpers 13, die abschnittsweise die Gehäuserückseite 16 bildet eine Wanne 20 vorgesehen ist, die in den monolithischen Gehäusegrundkörper 13 eingeformt ist durch entsprechende Ausgestaltung des Spritzgusswerkzeuges. Eine Wannenöffnung 21 wird begrenzt von einem umlaufenden Wannenrand 22, der wiederum ausgebildet ist an einem umlaufenden, umfangsgeschlossenen Ringkragen 23, welcher monolithisch mit dem Gehäusegrundkörper 13 ausgebildet ist und der im Bereich der Gehäuserückseite 16 vorsteht. Dieser Ringkragen 23 bildet eine ringförmige Stirnfläche 24 zur Auflage des in Fig. 1e gezeigten Gehäusedeckels aus.

In die Wanne 20 münden Verbindungskanäle 25 aus, die, wie sich aus Fig. 1g ergibt luftleitend mit den Entlüftungsbohrungen 5 der Kerne 4 verbunden sind und axial entlang der jeweiligen Verstellachse V mit dieser fluchten. Die Verbindungskanäle 25 sind von entsprechenden Abschnitten des monolithischen Gehäusegrundkörpers 13 ausgebildet. Zu erkennen ist aus Fig. 1g, dass die Verbindungskanäle 25 auslassseitige Öffnungen 26 im Bereich eines Wannengrundes 27 aufweisen, welcher, ebenso wie die Öffnungen 26 bezogen auf die Stirnfläche 24 bzw. den Wannenöffnungsrand 22 in Richtung der Anschlussgehäuseseite 14 zurückversetzt sind, so dass die Entlüftungsbohrungen 5 bzw. die jeweils damit axial fluchtenden Verbindungskanäle 25 luftleitend über die Wanne 20 selbst miteinander verbunden sind und keine entsprechende Auswölbung im Gehäusedeckel 17 vorgesehen sein muss.

In Fig. 1e ist, wie erwähnt, der Gehäusedeckel 17 in Alleinstellung gezeigt, und zwar von einer dem Gehäusegrundkörper 13 zugewandten Unterseite her. Zu erkennen ist eine umlaufende, randseitige bzw. unterseitige Ringnut 28 zur Auflage auf den umlaufenden Ringkragen 23 des Gehäusegrundkörpers 13.

Ebenfalls zu erkennen in Fig. 1e sind eine Mehrzahl von Auswölbungen 29, die den Verbindungskanälen sowie dem noch zu erläuternden Entlüftungskanal 30 zugeordnet sind, der den von dem Gehäusedeckel 17 und der Wanne 20 begrenzten Entlüftungssammelkanal 31 mit einer anschlussgehäuseseitigen Entlüftungsöffnung des Gehäuses 18 verbindet. Rückseitig der Auswölbungen 29 befinden sich monolithisch mit dem Gehäusedeckel 17 ausgebildete Verstärkungsstreben bzw. -rippen 32. Zu erkennen ist, dass der Gehäusedeckel 17 im Bereich der Gehäuserückseite 16 eben ausgebildet ist und keine von der Anschlussgehäuseseite abgewandte Auswölbungen aufweist.

Wie insbesondere aus Fig. 1g zu ersehen ist, sind sämtliche Funktionseinheiten der Mehrventilanordnung 19 im Gehäusekörper Gehäusegrundkörper 13 angeordnet bzw. gehalten, insbesondere durch Teil- oder Vollumspritzen. An der Anschlussgehäuseseite 14 ist eine Verteilerplatte 42 festgelegt, in die die Pneumatikanschlüsse 12 hineinragen. In dieser Verteilerplatte 42 sind auch die (Arbeits-)Ventilsitze 43 angeordnet mit denen elastomere Dichtelemente 33, die an den Ankermitteln 15 gehalten sind, zusammenwirken, um eine Verbindung zwischen einer Druckluft(versorgungs)leitung und einer Arbeitsleitung zu öffnen und zu schlie-ßen.

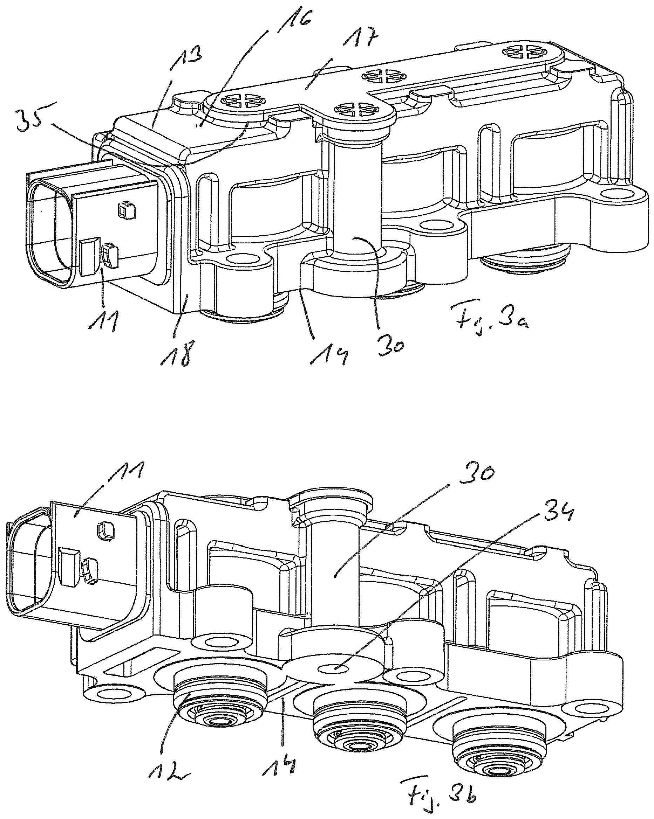

Der Detailaufbau der Mehrventilvorrichtung 19 gemäß Fig. 1f und 1g wird im Folgenden anhand der Fig. 3a bis 3d erläutert, wobei zur Vermeidung von Wiederholungen auch auf die vorhergehende Figurenbeschreibung verwiesen wird, die insoweit Anwendung findet.

In den Fig. 3a und 3b ist die hier als Dreier-Ventilanordnung ausgebildete Mehrventilvorrichtung 19 in unterschiedlichen perspektivischen Ansichten gezeigt.

Zu erkennen ist der monolithische Gehäusekörper 13, der zusammen mit dem Gehäusedeckel 17 das Gehäuse 18 ausbildet, welches abschnittsweise die Gehäuserückseite 16 und gegenüberliegend bzw. davon abgewandt die Anschlussgehäuseseite 14 mit ihren Pneumatikanschlüssen 12 aufweist. Zu erkennen ist auch der durch den erwähnten Umspritzungsvorgang hergestellte Entlüftungskanal 30, welcher sich parallel erstreckt zu den Verstellachsen der Ankermittel 15 und der zu einer Entlüftungsöffnung 34 auf der Anschlussgehäuseseite 14 führt.

Gut zu erkennen in Fig. 3a ist der flache bzw. rückseitig ebene Gehäusedeckel 17, der die gehäusegrundkörperseitige Wanne 20 luftdicht verschließt. Zwischen dem Gehäusedeckel 17 und dem Gehäusegrundkörper 13 ist eine luftdichte, umlaufende Schweißverbindung, d.h. eine materialschlüssige Verbindung ausgebildet.

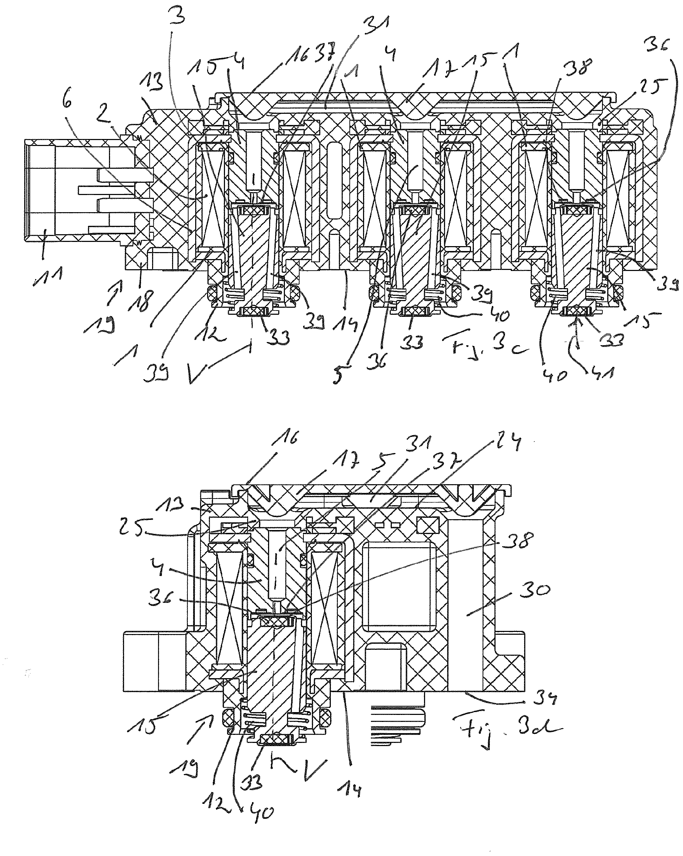

Aus den Fig. 3c und 3d wird der innere Aufbau der Mehrventilanordnung 19 deutlich. Zu erkennen sind die mehreren, nebeneinander angeordnete Ventilaktuatoren 1, jeweils umfassend axial entlang einer jeweiligen Verstellachse V verstellbare Ankermittel 15, die über ein in der Zeichnungsebene unteres, an den Ankermittel 15 gehaltenes, bevorzugt elastomeres Dichtelement 33 im Bereich des jeweiligen Pneumatikanschlusses 12 mit einem jeweiligen, nicht gezeigten (Arbeits-)Ventilsitz 43 (vgl. Fig. 1g) in der ebenfalls nicht gezeigten Verteilerplatte 42 (vgl. Fig. 1g) in einem Bereich außerhalb des Gehäuses 18 sowie außerhalb des jeweiligen Versorgungsanschlusses 12 zusammenwirken.

Gegenüberliegend entlang der Verstellachse V bzw. von dem Dichtelement 33 abgewandt, tragen die Ankermittel 15 jeweils ein weiteres elastomeres Dichtelement 36 zum Zusammenwirken mit einem jeweiligen Entlüftungsventilsitz 37 am Kern 4. Durch Anlage des in der Zeichnungsebene oberen Dichtelementes 36 am Entlüftungsventilsitz 37 kann die zugehörige Entlüftungsbohrung 5 im Kern 4 geschlossen werden. Bei den von dem Entlüftungsventilsitz 37 weg verstellten Ankermitteln 15 ist ein axial zwischen den Ankermitteln 15 und dem Kern 4 gebildeter Arbeitsraum 38 luftleitend über die Entlüftungsbohrung 5 sowie dem anschlie-ßenden Verbindungskanal 25 mit dem Entlüftungssammelkanal 31 verbunden, welcher wiederum gebildet ist von der Wanne 20 im Gehäusegrundkörper 13 zusammen mit dem Gehäusedeckel 17.

In Ankermitteln 15 sind sich entlang der jeweiligen Verstellachse V erstreckende, hier beispielhaft leicht schräg ausgebildete Verbindungsleitungen 39 als Durchgangsöffnungen bzw. Bohrungen ausgebildet, die den jeweiligen Pneumatikanschluss 12, genauer eine dort vorgesehene, nicht eingezeichnete Arbeitsleitung der ebenfalls nicht gezeigten Ventilplatte luftleitend mit dem Arbeitsraum 38 verbinden.

Eine Rückstellfeder 40, entgegen deren Federkraft die Ankermittel 15 bei Bestromung, d.h. hier in der Zeichnungsebene nach oben verstellbar sind, drückt die Ankermittel 15 in der Zeichnungsebene nach unten gegen den nicht eingezeichneten unteren Ventilsitz in der Ventilplatte, der zum Verschließen einer über einen Pfeil 41 nur einmal angedeuteten Druckluftleitung (Versorgungsleitung) dient. Sind die Spulenmittel 2 nicht bestromt, drückt die Rückstellfeder 40 die Ankermittel 15 gegen den unteren Ventilsitz, so dass die luftleitende Verbindung zwischen der Versorgungsleitung und der Arbeitsleitung unterbrochen ist. Gleichzeitig ist die Arbeitsleitung über die Verbindungsleitungen 39, den Arbeitsraum 38 (Arbeitskammer), die Entlüftungsbohrung 5 sowie den anschließenden Verbindungskanal 25 entlüftet, und zwar in den Entlüftungssammelkanal 31 hinein und über diesen bzw. der von diesem ausmündenden Entlüftungskanal 30 zur Entlüftungsöffnung 34. Bei Bestromung der Spulenmittel 2 werden die Ankermittel 15 von dem unteren Ventilsitz weg gegen den Entlüftungsventilsitz 37 verstellt, wodurch die Entlüftung unterbrochen bzw. die Entlüftungsbohrung 5 geschlossen wird.

Aus einer Zusammenschau der Fig. 3c und 3d ist zu erkennen, dass der monolithische Gehäusegrundkörper 13 die Ventilaktuatoren 1 umschließt und insbesondere auch in Bereiche zwischen die Ventilaktuatoren 1 hineinragt. Der in dem Gehäusegrundkörper 13 ausgebildete Entlüftungskanal 30, der an den Entlüftungssammelkanal 31 angeschlossen ist mündet in der anschlussgehäuseseitigen Entlüftungsöffnung 34.

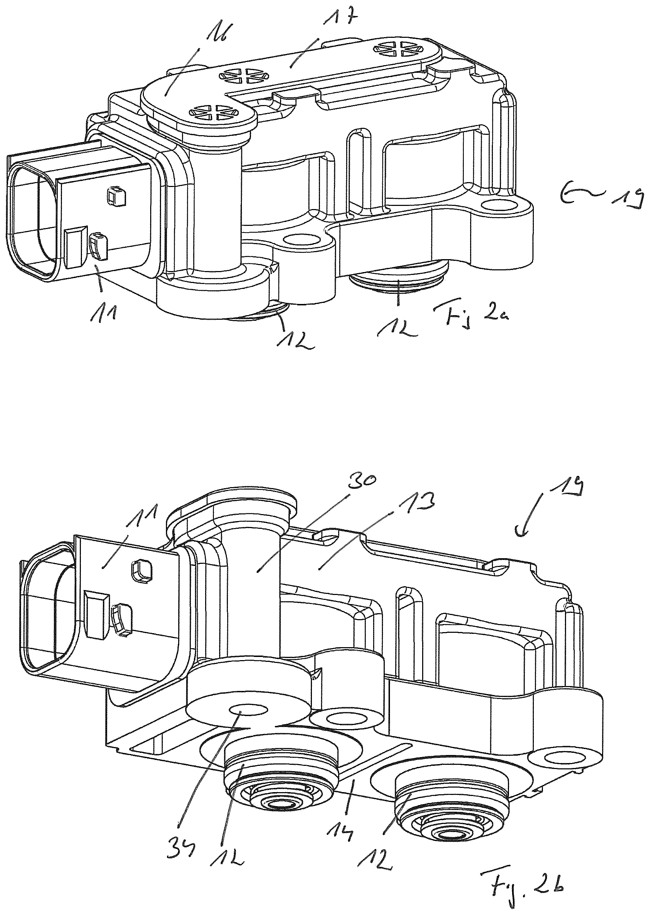

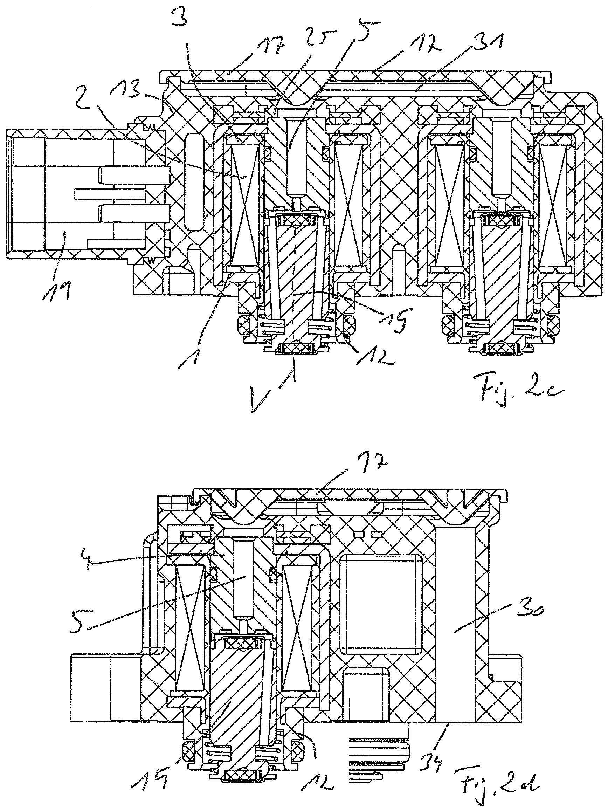

Grundsätzlich funktionell den gleichen Aufbau weist die Mehrventilanordnung 19 gemäß den Fig. 2a bis 2d auf, wobei hier anstatt drei Ventilaktuatoren 1 lediglich ausschließlich zwei Ventilaktuatoren 1 nebeneinander angeordnet sind. Zur Vermeidung von Wiederholungen wird hinsichtlich der überwiegenden Gemeinsamkeiten auf die vorhergehende Figurenbeschreibung verwiesen.

### Bezugszeichen

- 1: Ventilaktuator
- 2: Spulenmittel
- 3: Spulenträger
- 4: Kern
- 5: Entlüftungsbohrung
- 6: Joch
- 7: Kontaktelemente
- 8: Anschlussplatte
- 9: Leitungsflächen
- 10: Anflanschabschnitte
- 11: Anschlussmittel
- 12: Pneumatikanschluss
- 13: Gehäusegrundkörper
- 14: Anschlussgehäuseseite
- 15: Ankermittel
- 16: Gehäuserückseite
- 17: Gehäusedeckel
- 18: Gehäuse
- 19: Mehrventilvorrichtung
- 20: Wanne
- 21: Wannenöffnung
- 22: Wannenrand
- 23: Ringkragen
- 24: Stirnfläche
- 25: Verbindungskanäle
- 26: Öffnungen
- 27: Wannengrund
- 28: Ringnut
- 29: Auswölbungen
- 30: Entlüftungskanal
- 31: Entlüftungssammelkanal
- 32: Verstärkungsrippen
- 33: (elastomere) Dichtelemente
- 34: Entlüftungsöffnung
- 35: Schweißverbindung
- 36: (elastomere) Dichtelemente
- 37: Entlüftungsventilsitze
- 38: Arbeitsräume (Arbeitskammer)
- 39: Verbindungsleitungen
- 40: Rückstellfeder
- 41: Pfeil
- 42: Verteilerplatte
- 43: (Arbeits-)Ventilsitz
- V: Verstellachse

## Patentansprüche

1. Pneumatische Mehrventilvorrichtung, umfassend ein einen Gehäusegrundkörper (13) aufweisendes Gehäuse (18) mit mehreren elektromagnetischen Ventilaktuatoren (1), jeweils aufweisend stationär in dem Gehäuse (18) angeordnete Spulenmittel (2), einen in dem Gehäuse (18) angeordneten Kern (4) sowie als Reaktion auf eine Bestromung der Spulenmittel (2) in dem Gehäuse (18) relativ zu dem Kern (4) und einem Pneumatikanschluss (12) des Gehäuses (18) entlang einer Verstellachse (V) verstellbare Ankermittel (15), wobei die Verstellachsen (V) der Ankermittel (15) der Ventilaktuatoren (1) parallel ausgerichtet sind und die den Ankermitteln (15) zugeordneten Pneumatikanschlüsse (12) nebeneinander an einer Anschlussgehäuseseite (14) angeordnet sind, die entlang der Verstellachsen (V) von einer davon abgewandten Gehäuserückseite (16) beabstandet ist, wobei die Kerne (4) jeweils eine Entlüftungsbohrung (5) aufweisen, die luftleitend mit einem auf der Gehäuserückseite (16) von einem an dem Gehäusegrundkörper (13) fixierten Gehäusedeckel (17) begrenzten Entlüftungssammelkanal (31) auf der von der Anschlussgehäuseseite (14) abgewandten Seite der Kerne (4) verbunden sind, der luftleitend mit einer Entlüftungsöffnung des Gehäuses (18) verbunden ist, die auf einer von der Gehäuserückseite (16) unterschiedlichen Gehäuseseite, insbesondere auf der die Pneumatikanschlüsse (12) aufweisenden Anschlussgehäuseseite (14), angeordnet ist,
**dadurch gekennzeichnet,**
**dass** der Gehäusedeckel (17) an dem Gehäusegrundkörper (13) über eine luftdichte Schweißverbindung (35), insbesondere eine Ultraschall- oder Laserschweißverbindung, fixiert ist,
wobei der Entlüftungssammelkanal (31) eine im Gehäusegrundkörper (13) eingeformte Wanne (20) aufweist, deren in Richtung Gehäuserückseite (16) gewandte Wannenöffnung (21) von dem Gehäusedeckel (17) verschlossen ist und dass in die Wanne (20), insbesondere an einem Wannengrund (27), vom Gehäusegrundkörper (13) ausgebildete, luftleitend mit den Entlüftungsbohrungen (5) verbundene Verbindungskanäle (25) jeweils mit Abstand in Richtung Anschlussgehäuseseite (14) von dem Wannenrand (22) versetzt einmünden sowie ein im Gehäusekörper ausgebildeter die Entlüftungssammelöffnung (34) mit der Entlüftungsöffnung (34) verbindender, sich bevorzugt parallel zu den Verstellachsen (V) erstreckender, Entlüftungskanal (30) mit Abstand in Richtung Anschlussgehäuseseite (14) von dem Wannenrand (22) versetzt ausmündet.

2. Mehrventilvorrichtung nach Anspruch 1,
**dadurch gekennzeichnet,**
**dass** die Wannenöffnung (21) von einem den Wannenrand (22) ausbildenden, umlaufenden, monolithisch mit dem Gehäusegrundkörper (13) ausgebildeten Ringkragen (23) begrenzt ist, auf dem stirnseitig der Gehäusedeckel (17) aufsitzt.

3. Mehrventilvorrichtung nach Anspruch 2,
**dadurch gekennzeichnet,**
**dass** der Gehäusedeckel (17) mit dem Ringkragen (23) verschweißt ist.

4. Mehrventilvorrichtung nach einem der Ansprüche 1 bis 3,
**dadurch gekennzeichnet,**
**dass** der Gehäusedeckel (17) den Ringkragen (23) auf dessen Außenumfangsseite und/oder an dessen Innenumfangsseite in Richtung Anschlussgehäuseseite (14) übergreift.

5. Mehrventilvorrichtung nach einem der vorhergehenden Ansprüche,
**dadurch gekennzeichnet,**
**dass** der Gehäusedeckel (17) in Richtung der Entlüftungskanäle (30), bevorzugt in die Verbindungskanäle (25) hinein, ragende Ausstülpungen aufweist, die bevorzugt auf der Gehäuserückseite (16) Verstärkungsrippen (32) umfassen.

6. Mehrventilvorrichtung nach einem der vorhergehenden Ansprüche,
**dadurch gekennzeichnet,**
**dass** der Gehäusegrundkörper (13) als durch Umspritzen der Spulenmitteln (2) hergestellter monolithischer Kunststoffspritzgusskörper ausgebildet ist.

7. Mehrventilvorrichtung nach einem der Ansprüche 1 bis 6,
**dadurch gekennzeichnet,**
**dass** die Verbindungskanäle (25) eine gemeinsame elektrische Anschlussplatte (8) zur elektrischen Kontaktierung der mehreren Spulenmittel (2), bevorzugt axial in Verlängerung der Verstellachsen (V), durchsetzen, die von dem Gehäusegrundkörper (13) umspritzt ist.

8. Mehrventilvorrichtung nach einem der vorhergehenden Ansprüche,
**dadurch gekennzeichnet,**
**dass** die Pneumatikanschlüsse (12) durch abschnittsweises Umspritzen mit dem Gehäusegrundkörper (13) in diesem fixiert sind.

9. Mehrventilvorrichtung nach einem der vorhergehenden Ansprüche,
**dadurch gekennzeichnet,**
**dass** die Ankermittel (15) jeweils unmittelbar in einem, bevorzugt als Kunststoffspritzgussteil ausgebildeten Spulenträger (3), der zugehörigen Spulenmittel (2) längsverstellbar geführt sind, ohne Zwischenanordnung eines Ankerführungsrohres.

10. Mehrventilvorrichtung nach einem der vorhergehenden Ansprüche,
**dadurch gekennzeichnet,**
**dass** die, bevorzugt zentrisch in den Kernen (4) angeordneten, Entlüftungsbohrungen (5) axial geradlinig verlaufen und untereinander parallel sind und/oder dass von jedem Ankermittel und dem zugehörigen Kern (4) eine jeweilige Arbeitskammer begrenzt ist, die über die zugehörige Entlüftungsbohrung entlüftbar ist.

11. Mehrventilvorrichtung nach einem der vorhergehenden Ansprüche,
**dadurch gekennzeichnet,**
**dass** die Entlüftungsbohrungen (5) über eine jeweilige, insbesondere in die jeweilige Arbeitskammer (28) mündende, bevorzugt mindestens eine Bohrung in den jeweiligen Ankermitteln (15) umfassende und/oder am Außenumfang der Ankermittel (15) ausgebildete Verbindungsleitung (39) mit dem Pneumatikanschluss (12) und/oder einer Arbeitsleitung verbunden sind.

12. Mehrventilvorrichtung nach einem der vorhergehenden Ansprüche,
**dadurch gekennzeichnet,**
**dass** den Ankermitteln (15) jeweils ein der zugehörigen Entlüftungsbohrung (5) zugeordneter Entlüftungsventilsitz (37) zum Verschließen der jeweiligen Entlüftungsbohrung (5), bevorzugt durch Bestromen der Spulenmittel (2), zugeordnet ist

13. Mehrventilvorrichtung nach einem der vorhergehenden Ansprüche,
**dadurch gekennzeichnet,**
**dass** den Ankermitteln (15) jeweils ein im Bereich des Pneumatikanschlusses (12) zugeordneter Arbeitsventilsitz (43) zum Öffnen und Schließen einer luftleitendenden Verbindung zwischen einer Druckversorgungsleitung und einer Arbeitsleitung.

14. Mehrventilvorrichtung nach einem der vorhergehenden Ansprüche,
**dadurch gekennzeichnet,**
**dass** das Gehäuse (18) über die Pneumatikanschlüsse (12) mit einer Verteilerplatte (42) verbunden ist, bevorzugt aufweisend Arbeitsventilsitze (43) zum Zusammenwirken mit den Ankermitteln (15), mindestens eine Druckversorgungsleitung und mindestens eine Arbeitsleitung.

15. Verfahren zum Herstellen einer Mehrventilvorrichtung nach einem der vorhergehenden Ansprüche, wobei mehrere Spulenmittel (2) mit jeweils einem darin angeordneten eine Entlüftungsbohrung (5) aufweisenden Kern (4) bereitgestellt werden, und ein Gehäusegrundkörper (13), insbesondere durch Umspritzen der der Spulenmittel (2) hergestellt wird, an welchem ein Gehäusedeckel (17) zur Begrenzung eines Entlüftungssammelkanals (31) fixiert wird,
wobei ,
der Gehäusedeckel (17) mit dem, bevorzugt monolithischen, Gehäusegrundkörper (13) unter Herstellung einer luftdichten Schweißverbindung, insbesondere einer Ultraschall- oder Laserschweißverbindung, bevorzugt ohne Zwischenanordnung einer Elastomerdichtung, verschweißt wird.

## Claims

1. A pneumatic multi-valve device comprising a housing (18), which has a housing main body (13) with a plurality of electromagnetic valve actuators (1), each having coil elements (2) arranged in the housing (18) in a stationary manner, a core (4) arranged in the housing (18), and armature elements (15), which can be displaced along a displacement axis (V) in the housing (18) in relation to the core (4) and in relation to a pneumatic connection (12) of the housing (18) in response to energizing of the coil elements (2), wherein the displacement axes (V) of the armature elements (15) of the valve actuators (1) are oriented parallel and the pneumatic connections (12) associated with the armature elements (15) are arranged adjacent to each other on a connection housing side (14), which is spaced apart from a housing back side (16) facing away therefrom along the displacement axes (V), wherein the cores (4) each have a venting bore (5), which is connected, for air conduction, to a venting collection channel (31) on the side of the cores (4) facing away from the connection housing side (14), which venting collection channel is bounded on the housing back side (16) by a housing cover (17) fastened to the housing main body (13), which venting collection channel is connected, for air conduction, to a venting opening of the housing (18), which venting opening is arranged on a housing side different from the housing back side (16), in particular on the connection housing side (14) having the pneumatic connections (12),
**characterized in**
**that** the housing cover (17) is fixed to the housing base body (13) via an air-tight welded connection (35), in particular an ultrasonic or laser welded connection,
wherein the venting collection channel (31) has a trough (20), which is formed in the housing base body (13), the trough opening (21) of which, which faces in the direction of the housing back side (16), is closed by the housing cover (17) and that connection channels (25), which are formed by the housing base body (13) and which are connected to the venting bores (5) for air conduction, each lead into the trough (20), in particular on a trough base (27), in each case offset at a distance from the trough edge (22) in the direction of the connection housing side (14), and a venting channel (30), which is embodied in the housing body and connects the venting collection opening (34) to the venting opening (34) and preferably extends parallel to the displacement axes (V), opens out offset from the trough edge (22) at a distance in the direction of connection housing side (14).

2. The multi-valve device according to claim 1,
**characterized in**
**that** the trough opening (21) is bounded by a circumferential ring collar (23), which forms the trough edge (22) and which is embodied monolithically with the housing base body (13) and on which the housing cover (17) sits on the front side.

3. The multi-valve device according to claim 2,
**characterized in**
**that** the housing cover (17) is welded to the ring collar (23).

4. The multi-valve device according to one of claims 1 to 3,
**characterized in**
**that** the housing cover (17) engages across the ring collar (23) on the outer circumferential side thereof and/or on the inner circumferential side thereof in the direction of the connection housing side (14).

5. The multi-valve device according to one of the preceding claims,
**characterized in**
**that** the housing cover (17) has protuberances, which protrude in the direction of the venting channels (30), preferably into the connection channels (25), and which preferably comprise reinforcing ribs (32), preferably on the housing back side (16).

6. The multi-valve device according to one of the preceding claims,
**characterized in**
**that** the housing base body (13) is embodied as monolithic plastic injection molded body, which is produced by overmolding the coil elements (2).

7. The multi-valve device according to one of claims 1 to 6,
**characterized in**
**that** the connection channels (25) permeate a joint electrical connection plate (8) for electrically contacting the plurality of coil elements (2), preferably axially in extension of the displacement axes (V), which is overmolded by the housing base body (13).

8. The multi-valve device according to one of the preceding claims,
**characterized in**
**that**, by partial overmolding with the housing base body (13), the pneumatic connections (12) are fixed in said housing base body.

9. The multi-valve device according to one of the preceding claims,
**characterized in**
**that** the armature elements (15) are in each case guided directly in a coil carrier (3), which is preferably embodied as plastic injection molded part, of the associated coil elements (2) in a longitudinally displaceable manner, without interpositioning an armature guide tube.

10. The multi-valve device according to one of the preceding claims,
**characterized in**
**that** the venting bores (5), which are preferably centrically arranged in the cores (4), run axially in a straight line and are parallel among each other and/or that a respective working chamber, which can be vented via the corresponding venting bore, is bounded by each armature element and the associated core (4).

11. The multi-valve device according to one of the preceding claims,
**characterized in**
**that** the venting bores (5) are connected to the pneumatic connection (12) and/or a working line via a respective connection line (39), which in particular leads into the respective working chamber (28) and which preferably comprises at least one bore in the respective armature elements (15) and/or is embodied on the outer circumference of the armature elements (15).

12. The multi-valve device according to one of the preceding claims,
**characterized in**
**that** a venting valve seat (37), which is associated with the corresponding venting bore (5), is in each case associated with the armature elements (15) for closing the respective venting bore (5), preferably by energizing the coil elements (2).

13. The multi-valve device according to one of the preceding claims,
**characterized in**
**that** a working valve seat (43) in each case is associated with the armature elements (15) in the area of the pneumatic connection (12) for opening and closing a connection for air conduction between a pressure supply line and a working line.

14. The multi-valve device according to one of the preceding claims,
**characterized in**
**that** the housing (18) is connected via the pneumatic connections (12) to a distributor plate (42), preferably having working valve seats (43) for interacting with the armature elements (15), at least one pressure supply line and at least one working line.

15. A method for producing a multi-valve device according to one of the preceding claims, wherein a plurality of coil elements (2) each comprising a core (4) arranged therein and having a venting bore (5) is provided, and a housing base body (13) is produced, in particular by means of overmolding the coil elements (2), to which a housing cover (17) for bounding a venting collection channel (31) is fixed,
wherein
the housing cover (17) is welded to the, preferably monolithic, housing base body (13) by establishing an air-tight welded connection, in particular an ultrasonic or laser welded connection, preferably without interpostioning an elastomeric seal.

## Revendications

1. Dispositif pneumatique à soupapes multiples, comprenant un boîtier (18) ayant un corps (13) de base de boîtier et plusieurs actionneurs de soupape (1) électromagnétiques, chacun comprenant des moyens de bobine (2) disposé en régime établi dans le boîtier (18), un noyau (4) disposé dans le boîtier (18) et des moyens d'ancre (15) réglable le long d'un axe de réglage (V) par rapport au noyau (4) et à une connexion pneumatique (12) du boîtier (18) en réaction à une alimentation en courant de moyens de bobine (2) dans le boîtier (18), les axes de réglage (V) de moyens d'ancre (15) d'actionneurs de soupape (1) étant en parallèle et les connexions pneumatiques (12) qui sont associées aux moyens d'ancre (15) étant disposées l'une à côté de l'autre sur un côté (14) de boîtier de connexion qui est espacé d'un derrière de boîtier (16) en détourné le long d'axe de réglage (V), chaque noyau (4) ayant un trou d'échappement (5) qui sont reliés chacun d'une manière à conduire l'air à un canal (31) de collection d'échappement, qui est limité par un couvercle de boîtier (17) fixé sur le corps (13) de base de boîtier sur le derrière de boîtier (16), sur le côté de noyaux (4) détourné du côté (14) de boîtier de connexion, le canal (31) de collection d'échappement étant relié d'une manière à conduire l'air à une ouverture d'échappement du boîtier (18), l'ouverture d'échappement étant disposée sur un côté de boîtier différent du derrière de boîtier (16), notamment sur le côté (14) de boîtier de connexion ayant les connexions pneumatiques (12),
**caractérisé en ce que**
le couvercle de boîtier (17) est fixé au corps (13) de base de boîtier par une connexion par soudage (35) étanche, notamment une connexion par soudage par ultrasons ou par laser,
le canal (31) de collection d'échappement ayant une bassine (20) qui est moulée dans le corps (13) de base de boîtier et dont ouverture de bassine (21) tournée vers le derrière de boîtier (16) est fermée par le couvercle de boîtier (17), et **en ce que** des canaux de connexion (25) formés par le corps (13) de base de boîtier et reliés d'une manière à conduire l'air aux trous d'échappement (5) s'ouvrent dans la bassine (20), notamment à un fond de bassine (27), en quinconce avec le bord de bassine (22) à une distance vers le côté (14) de boîtier de connexion et un canal d'échappement (30) formé dans le corps de boîtier, reliant l'ouverture (34) de collection d'échappement à l'ouverture d'échappement (34) et s'étendant de préférence en parallèle aux axes de réglage (V) sortent en quinconce avec le bord de bassine (22) vers le côté (14) de boîtier de connexion à une distance.

2. Dispositif à soupapes multiples selon la revendication 1,
**caractérisé en ce que**
l'ouverture de bassine (21) est limitée par une manchette annulaire (23) encerclant, qui forme le bord de bassine (22) et qui est formée en une pièce avec le corps (13) de base de boîtier et sur laquelle le couvercle de boîtier (17) est posé sur la face frontale.

3. Dispositif à soupapes multiples selon la revendication 2,
**caractérisé en ce que**
le couvercle de boîtier (17) est soudé avec la manchette annulaire (23).

4. Dispositif à soupapes multiples selon l'une quelconque des revendications 1 à 3,
**caractérisé en ce que**
le couvercle de boîtier (17) s'engage au-dessus la manchette annulaire (23) sur son côté circonférentiel extérieur et/ou à son côté circonférentiel intérieur vers le côté (14) de boîtier de connexion.

5. Dispositif à soupapes multiples selon l'une quelconque des revendications précédentes,
**caractérisé en ce que**
le couvercle de boîtier (17) a des protubérances faisant saillie vers les canaux d'échappement (30), de préférence dans les canaux de connexion (25), les protubérances comprenant des nervures (32) de préférence sur le côté du derrière de boîtier (16).

6. Dispositif à soupapes multiples selon l'une quelconque des revendications précédentes,
**caractérisé en ce que**
le corps (13) de base de boîtier est formé comme corps à base d'injection de plastique produit en une pièce et en surmoulant les moyens de bobine (2).

7. Dispositif à soupapes multiples selon l'une quelconque des revendications 1 à 6,
**caractérisé en ce**
**qu'**une plaque de connexion (8) est parsemée de canaux de connexion (25) pour la mise en contact électrique de plusieurs moyens de bobine (2), de préférence en prolongation axiale d'axes de réglage (V) qui sont surmoulés par le corps (13) de base de boîtier.

8. Dispositif à soupapes multiples selon l'une quelconque des revendications précédentes,
**caractérisé en ce que**
les connexions pneumatiques (12) sont fixées dans le corps (13) de base de boîtier par le surmoulage partiel du corps (13) de base de boîtier.

9. Dispositif à soupapes multiples selon l'une quelconque des revendications 1 à 3,
**caractérisé en ce que**
les moyens d'ancre (15) sont chacun guidés directement dans un support de bobine (3) de moyens de bobine (2) associés à celui-ci sans un agencement intermédiaire d'un tuyau de guidage d'ancre, le support de bobine (3) de préférence étant formés comme partie à base d'injection de plastique.

10. Dispositif à soupapes multiples selon l'une quelconque des revendications précédentes,
**caractérisé en ce que**
les trous d'échappement (5), de préférence disposés centralement dans les noyaux (4), s'étendent linéament axialement et sont en parallèle l'un avec l'autre et/ou **en ce que** chaque chambre de travail, qui peut être échappé par le trou d'échappement correspondant, est limitée par un moyen d'ancre et le noyau associé correspondants.

11. Dispositif à soupapes multiples selon l'une quelconque des revendications précédentes,
**caractérisé en ce que**
les trous d'échappement (5) sont reliés avec la connexion pneumatique (12) et/ou avec une conduite de travail par une conduite de connexion (39) correspondante qui notamment s'ouvre dans la chambre de travail (28) correspondante et qui comprend au moins un trou dans les moyens d'ancre (15) correspondants et/ou qui est formée sur le circonférence extérieur de moyen d'ancre (15).

12. Dispositif à soupapes multiples selon l'une quelconque des revendications précédentes,
**caractérisé en ce que**
chaque moyen d'ancre (15) est associé à une siège de soupape (37) associée au trou d'échappement (5) correspondant afin de fermer le trou d'échappement (5) correspondant, de préférence en alimentant les moyens de bobine (2) en courant.

13. Dispositif à soupapes multiples selon l'une quelconque des revendications précédentes,
**caractérisé en ce que**
chaque moyen d'ancre (15) est associé à une siège de soupape (43) associée dans la partie de la connexion pneumatique (12) afin d'ouvrir et de fermer une connexion, qui conduit l'air, entre une conduite d'alimentation en pression et une conduite de travail.

14. Dispositif à soupapes multiples selon l'une quelconque des revendications précédentes,
**caractérisé en ce que**
le boîtier (18) est relié à une plaque de connexion (42) par les connexions pneumatiques (12), la plaque de connexion (42) de préférence comprenant des sièges de soupape (43) pour l'interaction avec les moyens d'ancre (15), au moins une conduite d'alimentation en pression et au moins une conduite de travail.

15. Procédé pour produire un dispositif à soupapes multiples selon l'une quelconque des revendications précédentes, plusieurs moyens de bobine (2), dont chacun a un noyau (4) ayant un trou d'échappement (5) et y disposé, étant prévus, et un corps (13) de base de boîtier (13) étant produit notamment en surmoulant les moyens de bobine (2) auxquels un couvercle de boîtier (17) est fixé pour limiter un canal (31) de collection d'échappement, le couvercle de boîtier (17) étant soudé avec le corps (13) de base de boîtier, qui est de préférence produit en une pièce, produisant ainsi une connexion étanche par soudage, notamment une connexion par soudage par ultrasons ou par laser, de préférence sans un agencement intermédiaire d'un joint d'élastomère.
